# EUROPÄISCHE PATENTSCHRIFT

(11) **EP 0 487 885 B1**
(45) Veröffentlichungstag und Bekanntmachung des Hinweises auf die Patenterteilung: **04.01.1995**
(21) Anmeldenummer: 91117607.1
(22) Anmeldetag: 16.10.1991
(51) Int. Cl.: H01F 7/14

(54) **Elektromagnetischer Drehsteller**
Electromagnetic rotary actuator
Actuateur rotatif électromagnétique

(30) Priorität: 28.11.1990 DE 4037793
(43) Veröffentlichungstag der Anmeldung: 03.06.1992
(73) Patentinhaber: ROBERT BOSCH GMBH, 70442 Stuttgart (DE)
(72) Erfinder: Kielbas, Eugen, W-7144 Asperg (DE); Renninger, Erhard, Dipl.-Ing., W-7145 Markgroeningen (DE)

(56) Entgegenhaltungen:
- EP-A- 0 108 732
- DE-A- 3 728 589
- GB-A- 2 177 263

## Beschreibung

### Stand der Technik

Die Erfindung geht aus von einem elektromagnetischen Drehsteller, insbesondere einem Leerlaufdrehsteller für Brennkraftmaschinen, der im Oberbegriff des Anspruchs 1 definierten Gattung.

Solche Drehsteller arbeiten nach dem Reluktanzprinzip, indem durch Änderung des magnetischen Widerstandes im Arbeitsluftspalt zwischen den Polschuhen des Drehankers und den Magnetpolen des Magnetgehäuses über den Drehwinkel des Drehankers ein gegen die Rückstellfeder wirkendes Drehmoment erzeugt wird. Der magnetische Widerstand läßt sich dabei durch den Querschnitt des wirksamen magnetischen Feldes, die Feldlänge und die relative Permeabiltät beeinflussen.

Bei einem bekannten Drehsteller dieser Art (DE 35 22 993 A1) wird der Gradient der Flächenüberdeckung von Magnetpol und Polschuh über den Drehwinkel des Drehankers genutzt. Die Polschuhe sind hierzu quer zur Drehachse des Drehankers gesehen keilförmig ausgebildet, wobei die in Achsrichtung einander gegenüberliegenden aufeinander zulaufenden Flanken zur Realisierung einer geforderten Durchflußcharakteristik geradlinig oder bogenförmig verlaufen. Bei kleinen Flächenüberdeckungen überlagern sich Änderungen der relativen Permeabilität im Sintermetall des Polschuhs, wobei Teilbereiche bis in die Sättigungsinduktion gehen. Diese Sättigung wirkt wie eine Vergrößerung des Luftspaltes. Das Maß der Luftspaltvergrößerung ist praktisch nicht faßbar und bedeutet in der Anwendung eine Toleranzaufweitung des Antriebsmomentes und damit der Kennliniencharakteristik des Drehstellers.

### Vorteile der Erfindung

Der erfindungsgemäße Drehsteller mit den kennzeichnenden Merkmalen des Anspruchs 1 hat demgegenüber den Vorteil, daß anstelle der Flächenänderung zur Beeinflussung des magnetischen Widerstandes im Luftspalt der Luftspalt selbst sich in Abhängigkeit vom Drehwinkel ändert. Die Kombination der beiden Umrißkonturen am Polschuh ermöglicht dabei mehr Freiheitsgrade in der Wahl der Polschuhbreite der Polschuhabschnitte, und der gegenseitigen Positionierung der Polschuhabschnitte und in der Bemessung der Arbeitsluftspalte und der axialen Stärke der beiden Polschuhabschnitte. Durch geeignete Wahl dieser Einflußmöglichkeiten ist eine Darstellung der geforderten Kennlinie des Drehstellers mit engen Toleranzen möglich.

Durch die in den weiteren Ansprüchen aufgeführten Maßnahmen sind vorteilhafte Weiterbildungen und Verbesserungen der im Anspruch 1 angegebenen Stelleinrichtung möglich.

Gemäß einer bevorzugten Ausführungsform der Erfindung sind die Polschuhe an einem auf dem Drehanker sitzenden Polring mit diesem vorzugsweise einstückig ausgebildet. Die drehfeste Befestigung des Polrings auf dem Drehanker erfolgt durch Aufpressen. Die Standzeit eines Stanz- bzw. Feinstanzzeuges erlaubt eine enger tolerierte Fertigung und liefert damit engere Produkttoleranzen als ein Sinterwerkzeug.

Bei der Aufpressung des Polrings auf den Drehanker mit einer Preßpassung, weist gemäß einer weiteren Ausführungsform der Erfindung der Polring eine Durchgangsöffnung auf, in welcher mindestens zwei einander diametral gegenüberliegende Kreisringsegmente hineinragen. Die inneren Ringwände der Kreisringsegmente bilden die Preßpassung zum Drehanker. Durch diese Ausbildung des Polrings wird der Preßumfang reduziert und damit eine höhere Fertigungssicherheit erzielt. Bevorzugt werden für die Preßpassung vier Kreisringsegmente mit einer in Umfangsrichtung gesehenen Breite von jeweils 45° verwendet.

Bei einer bevorzugten Ausführungsform der Erfindung ist der Polring mit Polschuhen laminiert als Blechpaket aus Trafoblech mit einer Vielzahl von in Achsrichtung aneinanderliegenden gleichen Blechschnitten ausgebildet. Aufgrund der damit erzielten höheren Permeabilität und der geringeren magnetischen Verluste und unter Berücksichtigung der Walzrichtung von Trafoblech ist eine weitere Verfeinerung der Drehstellerkennlinie mit noch stärkerer Annäherung an die Idealcharakteristik möglich. Weitere Verbesserungen können noch durch Anwendung qualitativ höherwertigem Material erzielt werden.

### Zeichnung

Die Erfindung ist anhand von in der Zeichnung dargestellten Ausführungsbeispielen in der nachfolgenden Beschreibung näher erläutert. Es zeigen:
- Fig. 1: einen Längsschnitt eines elektromagnetischen Drehstellers,
- Fig. 2: eine vergrößerte Darstellung einer Draufsicht eines Polrings im Drehsteller nach Fig. 1,
- Fig. 3: eine Ansicht des Polrings in Richtung Pfeil III in Fig. 2,
- Fig. 4: eine Draufsicht eines Polrings im Drehsteller nach Fig. 1 gemäß einem weiteren Ausführungsbeispiel,
- Fig. 5: eine Ansicht des Polrings in Richtung Pfeil V in Fig. 4.

### Beschreibung der Ausführungsbeispiele

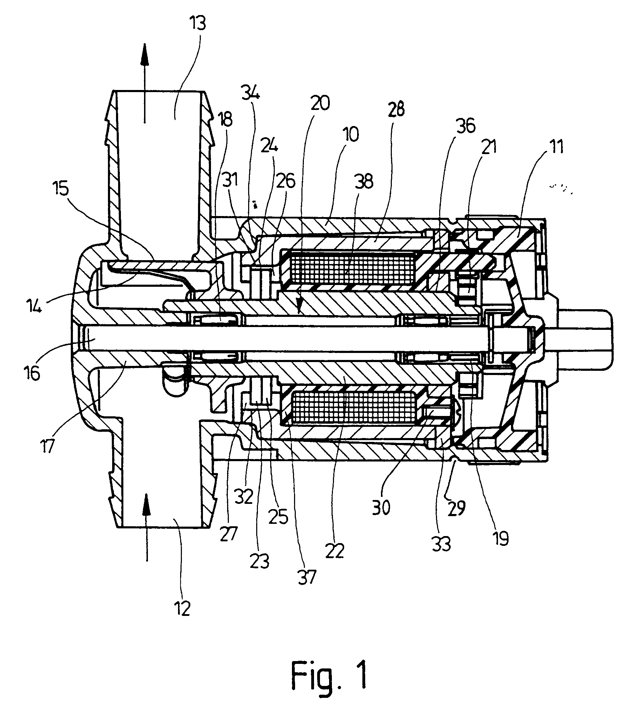

Der in Fig. 1 im Längsschnitt dargestellte elektromagnetische Drehsteller in Verwendung als Leerlaufdrehsteller für eine Brennkraftmaschine hat ein zylinderförmiges, nichtmagnetisches Gehäuse 10, an dessen einer Stirnseite ein Lagerteil 11 aus Kunststoff eingesetzt ist. Am anderen Ende des zylinderförmigen Gehäuses 10 ist ein Zuströmstutzen 12 und ein Abströmstutzen 13 ausgebildet, deren Achsen miteinander fluchten und sich quer zur Achse des Gehäuses 10 erstrecken. In der Verwendung als Leerlaufdrehsteller für eine Brennkraftmaschine ist der Zuströmstutzen 12 mit einem Saugrohrabschnitt stromaufwärts einer Drosselklappe verbunden und der Abströmstutzen 13 mit einem Saugrohrabschnitt stromabwärts der Drosselklappe. Zwischen Zuströmstutzen 12 und Abströmstutzen 13 ist ein rohrsegmentförmiges Drosselglied 14 angeordnet, das um die Achse des Gehäuses 10 gedreht werden kann und dabei einen Querschnitt 15 im Abströmstutzen 13 mehr oder weniger öffnet.

Eine Achse 16 ist einerseits im Lagerteil 11 und andererseits in einem koaxialen Gehäusezapfen 17 fest eingepreßt. Der Gehäusezapfen 17 steht im Bereich des Übergangs von Zuströmstutzen 12 zum Abströmstutzen 13 von der Gehäusewand radial vor. Auf der Achse 16 ist über zwei Rollenlager 18,19 ein Drehanker 20 drehbar gelagert, der von einer als Rückstellfeder dienenden Spiralfeder 21, die einerseits am Drehanker 20 und andererseits am Lagerteil 11 angreift, in einer Grundposition gehalten wird. Mit dem Drehanker 20 ist das Drosselglied 14 drehfest verbunden.

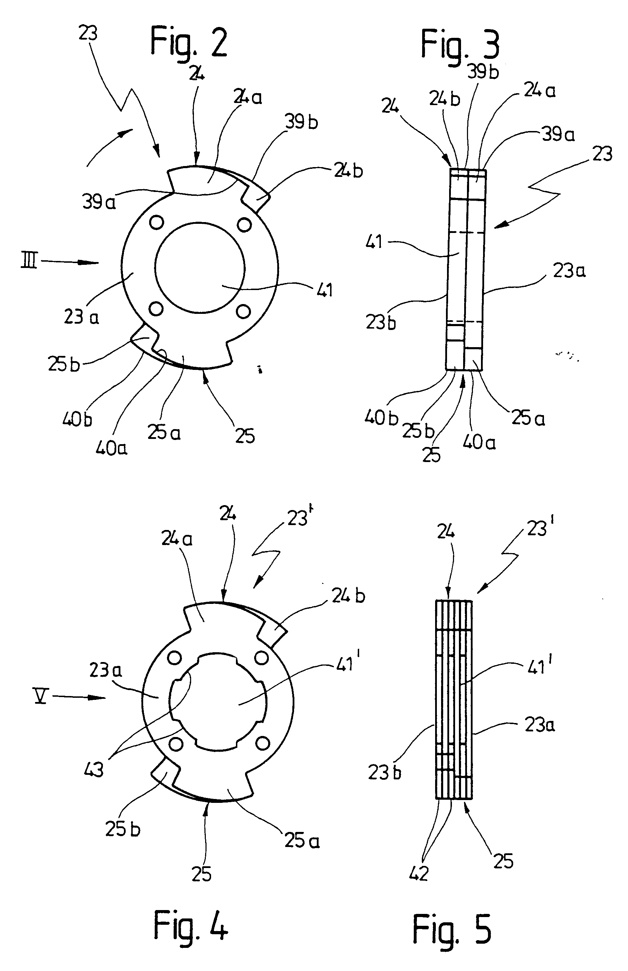

Der Drehanker 20 besteht aus einer zylinderförmigen Polhülse 22 und einem auf der Polhülse 22 sitzenden Polring 23, an dem zwei einander diametral gegenüberliegende Polschuhe 24,25 ausgebildet sind (Fig. 2). Jeder Polschuh 24,25 wirkt mit einem Magnetpol 26,27 an einem den Drehanker 20 mit Abstand umgebenden hülsenförmigen Magnetgehäuse 28 zusammen. Jeder Magnetpol steht dabei radial von dem Magnetgehäuse 28 ab. Die Magnetpole 26,27 liegen koaxial zu den Polschuhen 24,25, wobei zwischen ihnen jeweils ein Arbeitsluftspalt verbleibt. An dem von den Magnetpolen 26,27 abgekehrten Ende stößt das Magnetgehäuse 28 an ein scheibenförmiges Rückschlußjoch 33, das von einer radialen Verstemmung 29 an das Magnetgehäuse 28 angedrückt wird, wodurch sich das Magnetgehäuse 28 seinerseits nahe der Magnetpole 26,27 an einer Ringschulter 34 im Gehäuse 10 abstützt. Das Rückschlußjoch 33 weist eine zentrale Öffnung auf, durch welche die Polhülse 22 des Drehankers 20 unter Belassung eines ringförmigen Luftspaltes 36 hindurchragt. Die Polhülse 22 wird von einem zylindrischen Spulenträger 37 aus Kunststoff umschlossen, wobei zwischen dem Spulenträger 37 und der Polhülse 22 ein die Drehung letzterer erlaubender Ringspalt verbleibt. Auf den im Querschnitt etwa Doppel-T-Form aufweisenden Spulenträger 37 ist eine Magnetspule 38 aufgewickelt. Der Spulenträger 37 ist über drei Schrauben 30 an dem Rückschlußjoch 33 befestigt.

Wie aus der vergrößerten Darstellung des Polrings 23 in Fig. 2 und 3 hervorgeht, sind die Polschuhe 24,25 am Polring 23 einstückig ausgebildet. Der Polring 23 ist quergeteilt und besteht aus zwei axial aneinanderliegenden Polringhälften 23a und 23b mit entsprechenden axial nebeneinanderliegenden Polschuhabschnitten 24a,25a bzw. 24b,25b. Im Ausführungsbeispiel der Fig. 2 und 3 weisen die beiden Polringhälften 23a und 23b und die entsprechenden Polschuhabschnitte 24a und 24b bzw. 25a und 25b die gleiche axiale Stärke auf. Diese kann jedoch bei beiden Polringhälften 23a und 23b unterschiedlich gewählt werden. Die Polschuhabschnitte 24a und 24b bzw. 25a und 25b sind segmentförmig mit in Umfangsrichtung gesehen unterschiedlicher Breite ausgebildet, wobei zusätzlich ihre Umrißlinien einen unterschiedlichen Verlauf aufweisen. Während die Umrißlinie 39b bzw. 40b der Polschuhabschnitte 24b bzw. 25b auf einem konzentrischen Kreisbogen liegt, weicht die Umrißlinie 39a bzw. 40a des Polschuhabschnitts 24a bzw. 25a von dem einen Polschuhende bis hin zum anderen Polschuhende stetig zunehmend von diesem Kreisbogen ab. Die stetige Zunahme der Abweichung von der Kreisbogenform verläuft dabei in der Drehrichtung des Drehankers 20, so daß mit zunehmenden Hineindrehen der Polschuhabschnitte 24a und 25a in die Magnetpole 26 und 27 der Arbeitsluftspalt 31,32 abnimmt. Die Polringhälften 23a und 23b werden in einem Paket mit ihrer Durchgangsöffnung 41 auf die Polhülse 22 aufgeschoben und auf dieser aufgepreßt.

Die Ausführung des Polrings 23′ in Fig. 4 und 5 unterscheidet sich von dem Polring 23 gemäß Fig. 2 und 3 dadurch, daß der Polring 23′ mit Polschuhen 24 und 25 laminiert aus Trafoblech ausgeführt ist. Der als Blechpaket ausgebildete Polring 23′ besteht dabei aus einer Vielzahl von in Achsrichtung aneinanderliegenden gleichen Blechschnitten 42. Durch diese Ausbildung weist der Polring 23′ eine höhere Permeabilität und geringere magnetische Verluste auf. Der Polring 23′ wird mittels Preßpassung auf der Polhülse 22 befestigt. Hierzu sind in der Durchgangsöffnung 41′ des Polrings 23′ vier von der Ringfläche radial vorspringende Kreisringsegmente 43 vorgesehen, die um gleiche Drehwinkel am Innenumfang des Polrings 23′ versetzt angeordnet sind. Jedes Kreisringsegment 43 hat eine Breite von ungefähr 45°. Der Polring 23′ wird mittels eines Preßwerkzeugs auf die Polhülse 22 aufgeschoben, wobei durch die vier Kreisringsegmente 43 eine Reduktion des Preßumfangs erzielt wird. Der Preßsitz wird zwischen den inneren Ringwänden der Kreisringsegmente 43 und der Polhülse 22 hergestellt.

Bei den hier beschriebenen Ausführungsformen des Preßrings 23 bzw. 23′ sind die Polschuhabschnitte 24a und 24b bzw. 25a und 25b unterschiedlich breit ausgebildet, fluchten jedoch in Achsrichtung mit ihrer einen Endkante. Je nach Erfordernis ist es zur Erzielung der Idealcharakteristik der Kennlinie des Drehstellers auch möglich, die Polringhälften 23a und 23b so gegeneinander zu verdrehen, daß die Begrenzungskanten der Polschuhabschnitte 24a und 24b bzw. 25a und 25b nicht in Achsrichtung fluchten. Darüber hinaus können die Polringschuhe 24a und 24b bzw. 25a und 25b in Umfangsrichtung gesehen mit gleicher Breite ausgestattet sein. Wesentlich ist dabei jeweils, daß die Umrißlinien 39a und 40a der Polschuhabschnitte 24a und 25a und die Umrißlinien 39b und 40b der Polschuhabschnitte 24b und 25b den - wie beschrieben - voneinander abweichenden Verlauf aufweisen.

## Patentansprüche

1. Elektromagnetischer Drehsteller, insbesondere Leerlaufdrehsteller für Brennkraftmaschinen, mit einem Magnetgehäuse (28), an dem mindestens zwei Magnetpole (26,27) ausgebildet sind, mit einem im Magnetgehäuse drehbar gelagerten Drehanker (20), der eine gleiche Anzahl von mit jeweils einem Magnetpol zusammenwirkenden Polschuhen (24,25) trägt, die unter Belassung eines Arbeitsluftspaltes koaxial zu den Magnetpolen angeordnet sind, und mit einer am Drehanker angreifenden Rückstellfeder (21), dadurch gekennzeichnet, daß jeder Polschuh (24,25) zwei in Achsrichtung nebeneinanderliegende Polschuhabschnitte (24a,24b bzw. 25a,25b) mit unterschiedlich ausgeformten Umrißlinien (39a,40a bzw. 39b,40b) aufweist, von denen die eine Umrißlinie (39b,40b) kreisbogenförmig ist und die andere Umrißlinie (39a,40a) von dem einen zum anderen Polschuhende stetig zunehmend von der Kreisbogenform abweicht.

2. Drehsteller nach Anspruch 1, dadurch gekennzeichnet, daß die beiden Polschuhabschnitte (24a,24b bzw. 25a,25b) in Umfangsrichtung gesehen unterschiedliche Breite aufweisen.

3. Drehsteller nach Anspruch 1 oder 2, dadurch gekennzeichnet, daß die beiden Polschuhabschnitte (24a,24b bzw. 25a,25b) in Umfangsrichtung gegeneinander verdreht angeordnet sind.

4. Drehsteller nach einem der Ansprüche 1 - 3, dadurch gekennzeichnet, daß die Polschuhe (24,25) an einem auf dem Drehanker (20) sitzenden Polring (23;23′) ausgebildet sind.

5. Drehsteller nach Anspruch 4, dadurch gekennzeichnet, daß der Polring (23;23′) mit Polschuhen (24,25) einstückig ausgebildet ist.

6. Drehsteller nach Anspruch 4 oder 5, dadurch gekennzeichnet, daß der Polring (23;23′) auf dem Drehanker (20) aufgepreßt ist.

7. Drehsteller nach Anspruch 6, dadurch gekennzeichnet, daß der Polring (23′) eine Durchgangsöffnung (41′) aufweist, in welche mindestens zwei einander diametral gegenüberliegende Kreisringsegmente (43) hineinragen, deren innere Ringwände den Preßsitz zum Drehanker (20) herstellen.

8. Drehsteller nach Anspruch 7, dadurch gekennzeichnet, daß insgesamt vier um gleiche Umfangswinkel gegeneinander versetzte Kreisringsegmente (43) mit einer in Umfangsrichtung gesehenen Breite von jeweils etwa 45° vorgesehen sind.

9. Drehsteller nach einem der Ansprüche 4 - 8, dadurch gekennzeichnet, daß der Polring (23′) mit Polschuhen (24,25) laminiert als Blechpaket aus einer Vielzahl von in Achsrichtung aneinanderliegenden gleichen Blechschnitten (42) ausgebildet ist.

10. Drehsteller nach einem der Ansprüche 4 - 9, dadurch gekennzeichnet, daß der Drehanker (20) eine Polhülse (22) aufweist, die sich über Rollenlager (18,19) auf einer das Magnetgehäuse (28) durchziehenden Achse (16) abstützt und an dem einen Ende den Polring (23) mit Polschuhen (24,25) trägt und an dem anderen Ende unter Belassung eines Luftspalts (36) durch ein Rückschlußjoch (33) des Magnetgehäuses (28) hindurchtritt.

## Claims

1. Electromagnetic rotation regulating unit, especially idling rotation regulating unit for internal combustion engines, having a magnet housing (28), on which at least two magnet poles (26, 27) are formed, having a rotary armature (20) which is rotatably mounted in the magnet housing and which carries an equal number of pole pieces (24, 25) which cooperate with in each case one magnet pole and which are disposed coaxially with the magnet poles so as to leave a working airgap, and having a restoring spring (21) which engages at the rotary armature, characterized in that each pole piece (24, 25) exhibits two pole piece portions (24a, 24b and 25a, 25b respectively), which are adjacent to one another in the axial direction, with differently designed outlines (39a, 40a and 39b, 40b respectively), of which the one outline (39b, 40b) is circular-arc-shaped and the other outline (39a, 40a) differs progressively increasingly from the circular arc shape from the one to the other pole piece end.

2. Rotation regulating unit according to Claim 1, characterized in that the two pole piece portions (24a, 24b and 25a, 25b respectively) exhibit differing width, seen in the circumferential direction.

3. Rotation regulating unit according to Claim 1 or 2, characterized in that the two pole piece portions (24a, 24b and 25a, 25b respectively) are disposed to be rotated relative to one another in the circumferential direction.

4. Rotation regulating unit according to one of Claims 1-3, characterized in that the pole pieces (24, 25) are formed on a pole ring (23; 23′) sitting on the rotary armature (20).

5. Rotation regulating unit according to Claim 4, characterized in that the pole ring (23; 23′) is formed integrally with pole pieces (24, 25).

6. Rotation regulating unit according to Claim 4 or 5, characterized in that the pole ring (23; 23′) is pressed on the rotary armature (20).

7. Rotation regulating unit according to Claim 6, characterized in that the pole ring (23′) exhibits a through opening (41′), into which at least two mutually diametrically opposite circular ring segments (43) project, the inner annular walls of which create the press fit to the rotary armature (20).

8. Rotation regulating unit according to Claim 7, characterized in that in total four circular ring segments (43), displaced relative to one another by equal circumferential angles, having a width of in each case approximately 45°, seen in the circumferential direction, are provided.

9. Rotation regulating unit according to one of Claims 4-8, characterized in that the pole ring (23′) is formed with pole pieces (24, 25) laminated as a stack of laminations from a plurality of identical sheet metal laminations (42) which adjoin one another in the axial direction.

10. Rotation regulating unit according to one of Claims 4-9, characterized in that the rotary armature (20) exhibits a pole sleeve (22) which is supported by means of roller bearings (18, 19) on a shaft (16) passing through the magnet housing (28) and at the one end carries the pole ring (23) with pole pieces (24, 25) and at the other end passes through a return yoke (33) of the magnet housing (28), leaving an airgap (36).

## Revendications

1. Actuateur rotatif électromagnétique, notamment actuateur rotatif de ralenti pour des moteurs à combustion interne, comportant un boîtier d'aimant (28) sur lequel sont réalisés au moins deux pôles magnétiques (26, 27), un induit tournant (20) monté tournant dans le boîtier magnétique, cet induit ayant un même nombre de pièces polaires (24, 25) coopérant chaque fois avec un pôle magnétique, et qui laisse subsister un entrefer de travail en étant monté coaxialement au pôle magnétique, ainsi qu'un ressort de rappel (21) agissant sur l'induit tournant, actuateur caractérisé en ce que chaque pièce polaire (24, 25) comporte deux segments de pièce polaire (24a, 24b) ou (25a, 25b) situés l'un derrière l'autre dans la direction axiale, avec des lignes de contour (39a, 40a) ou (39b, 40b) de formes différentes, l'une des lignes de contour (39b, 40b) étant en arc de cercle et l'autre ligne de contour (39a, 40a) étant une courbe différant d'un arc de cercle en augmentant en continu d'une extrémité de pièce polaire vers l'autre.

2. Actuateur rotatif selon la revendication 1, caractérisé en ce que les deux segments de pièce polaire (24a, 24b ou 25a, 25b) ont une largeur différente vues dans la direction périphérique.

3. Actuateur selon la revendication 1 ou 2, caractérisé en ce que les deux segments de pièce polaire (24a, 24b ou 25a, 25b) sont disposés tournés l'un envers l'autre, vus dans la direction périphérique.

4. Actuateur rotatif selon l'une des revendications 1 à 3, caractérisé en ce que les pièces polaires (24, 25) sont réalisées sur un anneau polaire (23, 23′) monté sur l'induit tournant (20).

5. Actuateur rotatif selon la revendication 4, caractérisé en ce que l'anneau polaire (23, 23′) fait corps avec les pièces polaires (24, 25).

6. Actuateur rotatif selon la revendication 4 ou 5, caractérisé en ce que l'anneau polaire (23, 23′) est fretté sur l'induit tournant (20).

7. Actuateur rotatif selon la revendication 6, caractérisé en ce que l'anneau polaire (23′) comporte un orifice de passage (41′) dans lequel pénètre au moins deux segments d'anneau de cercle (43) diamétralement opposés et dont la paroi annulaire intérieure réalise le siège pressé pour l'induit tournant (20).

8. Actuateur rotatif selon la revendication 7, caractérisé en ce que globalement quatre segments d'anneau de cercle (43) décalés les uns par rapport aux autres d'un même arc de cercle, sont prévus avec une largeur, vus dans la direction périphérique égale chaque fois à environ 45°.

9. Actuateur rotatif selon l'une des revendications 4 à 8, caractérisé en ce que l'anneau polaire (23′) est réalisé avec les pièces polaires (24, 25) par laminage d'un paquet de tôles à partir d'un grand nombre de mêmes segments de tôles (42) écartés dans la direction axiale.

10. Actuateur rotatif selon l'une des revendications 4 à 9, caractérisé en ce que l'induit tournant (20) comporte une douille polaire (22) qui s'appuie par des paliers à cylindres (18, 19) sur un axe (16) traversant le boîtier d'aimant (28) et porte à une extrémité l'anneau polaire (23) avec les pièces polaires (24, 25) et à l'autre extrémité, en laissant un entrefer (36), il traverse une culasse de retour de flux (33) du boîtier d'aimant (28).
